# EUROPÄISCHE PATENTSCHRIFT

(11) **EP 3 747 688 B1**
(45) Veröffentlichungstag und Bekanntmachung des Hinweises auf die Patenterteilung: **25.11.2026**
(21) Anmeldenummer: 20174876.1
(22) Anmeldetag: 15.05.2020
(51) Int. Cl.: B60L 53/14

(54) **STEUERUNG EINES LADEVORGANGS FÜR EIN KRAFTFAHRZEUG**
CONTROL OF A CHARGING PROCESS FOR A MOTOR VEHICLE
COMMANDE D'UN PROCESSUS DE RECHARGE POUR UN VÉHICULE AUTOMOBILE

(30) Priorität: 06.06.2019 DE 102019208288
(43) Veröffentlichungstag der Anmeldung: 09.12.2020
(73) Patentinhaber: VOLKSWAGEN AG, 38440 Wolfsburg (DE)
(72) Erfinder: Schütz, Daniel, 38165 Lehre (DE); Wettin, Kevin, 29365 Sprakensehl (DE)

(56) Entgegenhaltungen:
- WO-A2-2010/060720
- DE-A1- 102016 220 848
- DE-B4- 102015 213 161

## Beschreibung

Die vorliegende Erfindung betrifft Verfahren, ein Computerprogramm mit Instruktionen und Vorrichtungen zum Steuern eines Ladevorgangs für ein Kraftfahrzeug. Die Erfindung betrifft weiterhin ein Kraftfahrzeug und einen Laderoboter, in denen erfindungsgemäße Verfahren oder erfindungsgemäße Vorrichtungen eingesetzt werden.

In den kommenden Jahren werden mehr und mehr Fahrzeuge in der Lage sein, eine zunehmende Anzahl von Situationen automatisch und ohne direktes Eingreifen des Fahrers zu bewältigen. Um mit diesen Situationen umzugehen, werden die autonomen oder teilautonomen Fahrzeuge mit einer immer größeren Anzahl von Sensoren ausgestattet, wie Ultraschallsensoren, Laserscanner, Radarsensoren, Lidarsensoren, Kameras, etc. Diese Sensoren werden verwendet, um die Umgebung des Fahrzeugs abzutasten und die erfassten Informationen Algorithmen zur Verfügung zu stellen, die für die sichere Bewegung des autonomen oder teilautonomen Fahrzeugs in seiner Umgebung verantwortlich sind.

Ein spezieller Fall von Fahrsituationen für das autonome Fahren sind solche, bei denen externe Einheiten zumindest teilweise die Kontrolle über die autonomen oder teilautonomen Fahrzeuge übernehmen. Solche Szenarien sind derzeit vor allem im Bereich der Parkraumbewirtschaftung zu finden. Um beispielsweise ein Fahrzeug in eine Zielposition zu bringen, bestimmt ein zentrales Leitsystem der Parkeinrichtung eine Trajektorie, die dem autonomen oder teilautonomen Fahrzeug zur Verfügung gestellt wird. Das Fahrzeug bewegt sich dann autonom entlang dieser Trajektorie.

Beispielsweise beschreibt DE 10 2016 003 231 A1 ein Verfahren zum Steuern eines zumindest teilautonom betriebenen Kraftfahrzeugs. Das Kraftfahrzeug oder seine Umgebung wird durch wenigstens eine Sensoreinrichtung erfasst. Die Bewegung des Kraftfahrzeugs steuernde Bewegungsinformationen werden von einer kraftfahrzeugexternen Recheneinrichtung ermittelt und an das Kraftfahrzeug übertragen. Die Bewegungsinformationen werden dabei in Abhängigkeit wenigstens einer das Manövriervermögen des Kraftfahrzeugs oder das Detektionsvermögen der Sensoreinrichtung betreffenden Information ermittelt.

Für das automatische Laden von Elektrofahrzeugen wurden erste Laderoboter entwickelt, die in der Lage sind, einen Ladestecker in eine Ladebuchse eines Elektrofahrzeugs einzustecken.

Beispielsweise beschreibt WO 2014/015991 A2 ein Ladesystem für ein Kraftfahrzeug. Das Ladesystem umfasst einen Roboter mit einem Steuermittel, einem Krafterfassungsmittel und einem an dem Roboter befestigten Stecker. Der Stecker ist dazu eingerichtet, mit einem fahrzeugseitigen Gegenstecker eine lösbare Steckverbindung zum Aufladen eines elektrischen Energiespeichers des Kraftfahrzeugs herzustellen. Das Steuermittel ist dazu eingerichtet, mit dem Krafterfassungsmittel zu kommunizieren und den robotergeführten Stecker auf Basis einer von dem Krafterfassungsmittel ermittelten Kraft mit dem Gegenstecker zu verbinden.

Das automatisierte Einstecken von AC- und DC-Ladekabeln durch einen Roboter ist ein vielversprechendes Konzept, um die oben genannten automatisierten Parkfunktionen von Kraftfahrzeugen zu ergänzen und die Auslastung von Ladestationen für Kraftfahrzeuge zu erhöhen. Daneben können Laderoboter auch andernorts eingesetzt werden, z.B. in privaten Garagen, an Autobahnraststätten, etc.

Vor diesem Hintergrund beschreibt WO 2010/060720 A2 ein Verfahren zum automatischen Laden von elektrisch betriebenen Fahrzeugen. Bei dem Verfahren wird ein Fahrzeug eingesetzt, das mit Sensoren zur Umgebungserfassung, Navigation und Kollisionsvermeidung, einer Fahrzeugsteuerung zum selbstgesteuerten Fahren, einem Ladesystem zum elektrischen Laden des Fahrzeugs und einem Ladekontakt ausgestattet ist. Der Ladekontakt ist mit einem Ladekontakt einer Ladestation an einem Ladeort funktional verbindbar. Das Fahrzeug startet an einem beliebigen Startpunkt in einem Übergabebereich und steuert selbstgesteuert einen ausgewählten Ladeort an. Nach einem Ladevorgang am Ladeort verlässt das Fahrzeug selbstgesteuert den Ladeort und fährt einen ausgewählten Übernahmebereich an.

DE 10 2016 220 848 A1 beschreibt ein Ladesystem zum automatisierten Laden eines elektrisch betriebenen Fahrzeugs in einer Parkeinrichtung, wobei das elektrisch betriebene Fahrzeug einen elektrischen Energiespeicher aufweist. Das Ladesystem umfasst eine Stromquelle, mit welcher der Energiespeicher verbunden und geladen werden kann, sowie einen Roboter, der dazu ausgebildet ist, den Energiespeicher automatisch mit der Stromquelle zu verbinden. Zudem umfasst das Ladesystem einen Backend-Server, der ausgebildet ist, den Roboter aufzufordern, den Energiespeicher automatisch mit der Stromquelle zu verbinden um einen Ladevorgang des Energiespeichers einzuleiten.

DE 10 2015 213 161 B4 beschreibt einen Roboter zum automatisierten Stecken eines Ladesteckers in eine Schnittstelle eines Fahrzeugs. Der Roboter umfasst mindestens einen Aktor und mindestens eine Erfassungseinrichtung zur Erfassung der Schnittstelle und ist derart ausgebildet, dass dieser nach Erfassung der Schnittstelle den Ladestecker automatisch in die Schnittstelle steckt. Der Roboter ist zudem derart ausgebildet, dass dieser aus den Daten der Erfassungseinrichtung mindestens Lage und Art der Schnittstelle ermittelt und in Abhängigkeit der Art der Schnittstelle einen Ladestecker für den Einsteckvorgang auswählt.

Für das automatische Stecken eines Ladekabels in ein Elektrofahrzeug mittels eines Laderoboters ist ein Zusammenspiel zwischen Fahrzeug und Roboter abzustimmen, damit der Vorgang effektiv, effizient und ohne Kollisionen stattfinden kann. Da in unterschiedlichen Szenarien unterschiedliche Roboter zum Einsatz kommen können, muss der Kommunikationsablauf übertragbar sein.

Es ist eine Aufgabe der Erfindung, Lösungen für das Steuern eines Ladevorgangs für ein Kraftfahrzeug bereitzustellen, die einen automatisierten Ladevorgang mittels eines Laderoboters ermöglichen.

Diese Aufgabe wird durch ein Verfahren mit den Merkmalen des Anspruchs 1 oder 5, durch ein Computerprogramm mit Instruktionen gemäß Anspruch 8 und durch eine Vorrichtung mit den Merkmalen des Anspruchs 9 oder 10 gelöst. Bevorzugte Ausgestaltungen der Erfindung sind Gegenstand der abhängigen Ansprüche.

Gemäß einem ersten Aspekt der Erfindung umfasst ein Verfahren für ein Kraftfahrzeug zum Steuern eines Ladevorgangs für das Kraftfahrzeug die Schritte:
- Aufbauen einer direkten Kommunikationsverbindung zwischen dem Kraftfahrzeug und einem Laderoboter, sobald das Kraftfahrzeug in die Reichweite des Laderoboters kommt;
- Herstellen eines für den Ladevorgang erforderlichen Zustands des Kraftfahrzeugs vor dem Öffnen einer Ladeklappe des Kraftfahrzeugs, wobei der erforderliche Zustand zumindest einen der folgenden Zustände umfasst: die Parkbremse ist angezogen, der Gangwahlhebel befindet sich in der Stellung "P", das Kraftfahrzeug ist verriegelt, es besteht ein Ladewunsch, die Verbindung zum Laderoboter besteht;
- Öffnen der Ladeklappe des Kraftfahrzeugs; und
- Übergeben eines Rechts zum Blockieren des Kraftfahrzeugs an den Laderoboter, bevor durch den Laderoboter ein Ladestecker in eine Ladebuchse des Kraftfahrzeugs eingesteckt wird.

Gemäß einem weiteren Aspekt der Erfindung enthält ein Computerprogramm Instruktionen, die bei Ausführung durch einen Computer den Computer zur Ausführung der folgenden Schritte seitens eines Kraftfahrzeugs zum Steuern eines Ladevorgangs für das Kraftfahrzeug veranlassen:
- Aufbauen einer direkten Kommunikationsverbindung zwischen dem Kraftfahrzeug und einem Laderoboter, sobald das Kraftfahrzeug in die Reichweite des Laderoboters kommt;
- Herstellen eines für den Ladevorgang erforderlichen Zustands des Kraftfahrzeugs vor dem Öffnen einer Ladeklappe des Kraftfahrzeugs, wobei der erforderliche Zustand zumindest einen der folgenden Zustände umfasst: die Parkbremse ist angezogen, der Gangwahlhebel befindet sich in der Stellung "P", das Kraftfahrzeug ist verriegelt, es besteht ein Ladewunsch, die Verbindung zum Laderoboter besteht;
- Öffnen der Ladeklappe des Kraftfahrzeugs; und
- Übergeben eines Rechts zum Blockieren des Kraftfahrzeugs an den Laderoboter, bevor durch den Laderoboter ein Ladestecker in eine Ladebuchse des Kraftfahrzeugs eingesteckt wird.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung für ein Kraftfahrzeug zum Steuern eines Ladevorgangs für das Kraftfahrzeug auf:
- ein Kommunikationsmodul, das eingerichtet ist, eine direkte Kommunikationsverbindung zwischen dem Kraftfahrzeug und einem Laderoboter aufzubauen, sobald das Kraftfahrzeug in die Reichweite des Laderoboters kommt;
- zumindest ein Steuergerät, das eingerichtet ist, vor dem Öffnen einer Ladeklappe des Kraftfahrzeugs einen für den Ladevorgang erforderlichen Zustand des Kraftfahrzeugs herzustellen und anschließend die Ladeklappe des Kraftfahrzeugs zu öffnen, wobei der erforderliche Zustand zumindest einen der folgenden Zustände umfasst: die Parkbremse ist angezogen, der Gangwahlhebel befindet sich in der Stellung "P", das Kraftfahrzeug ist verriegelt, es besteht ein Ladewunsch, die Verbindung zum Laderoboter besteht; und
- ein Kontrollmodul, das eingerichtet ist, ein Recht zum Blockieren des Kraftfahrzeugs an den Laderoboter zu übergeben, bevor durch den Laderoboter ein Ladestecker in eine Ladebuchse des Kraftfahrzeugs eingesteckt wird.

Erfindungsgemäß ist aus Sicht des Kraftfahrzeugs vorgesehen, dass eine direkte Kommunikation zwischen dem Kraftfahrzeug und dem Laderoboter stattfindet. Kommt das Fahrzeug in die Reichweite des Roboters, so wird eine Verbindung hergestellt. Das Fahrzeug wird daraufhin vor dem Roboter geparkt oder parkt dort automatisch. Sind alle für den Ladevorgang erforderlichen Zustände des Fahrzeugs erfüllt, wird dies an den Laderoboter kommuniziert und die Ladeklappe geöffnet. Erforderlichen Zustände können z.B. sein, dass die Parkbremse angezogen ist, sich der Gangwahlhebel in der Stellung "P" befindet, das Fahrzeug verriegelt ist, ein Ladewunsch besteht, die Verbindung zum Roboter besteht, etc. Nach dem Öffnen der Ladeklappe wird die Verantwortung für bzw. die Aufsicht über das Fahrzeug auf den Laderoboter übertragen. Dazu erhält der Laderoboter die Berechtigung, das Fahrzeug zu blockieren. Das Fahrzeug kann nun erst wieder aktiv werden, wenn der Roboter eine Freigabe erteilt. Auf diese Weise wird verhindert, dass das Fahrzeug ausparkt, während sich der Roboter in der Nähe der Ladeklappe befindet. Nachdem das Fahrzeug durch den Laderoboter blockiert wurde, wird der Ladestecker durch den Laderoboter in die Ladebuchse des Fahrzeugs eingesteckt und der Ladevorgang gestartet.

Gemäß einem Aspekt der Erfindung empfängt das Kraftfahrzeug vor dem Aufbauen der Kommunikationsverbindung einen Identifikator des Laderoboters für die Kommunikation mit dem Laderoboter. Alternativ wird ein solcher Identifikator aus einem Speicher des Kraftfahrzeugs ausgelesen. Beispielsweise kann das Fahrzeug eine eindeutige Bluetooth ID oder eine WLAN-MAC-Adresse (WLAN: Wireless Local Area Network; drahtloses lokales Netzwerk) (MAC: Media Access Control; Medienzugriffssteuerung) des Roboters erhalten. Diese kann z.B. von einem Leitsystem eines Parkhauses, in dem der Laderoboter bereitgestellt wird, per WLAN an das Fahrzeug übermittelt werden. Alternativ kann der Fahrer z.B. einen QR-Code (QR: Quick Response; schnelle Antwort) mit hinterlegten Daten scannen. Durch das Bereitstellen eines Identifikators ist sichergestellt, dass die Kommunikation ausschließlich mit dem vorgesehenen Laderoboter erfolgen kann.

Gemäß einem Aspekt der Erfindung umfasst das Verfahren zusätzlich die Schritte:
- in Reaktion auf das Beenden eines Ladevorgangs, Empfangen einer Entriegelungsaufforderung für den Ladestecker;
- Entriegeln des Ladesteckers;
- Empfangen einer Freigabe des Kraftfahrzeugs vom Laderoboter; und
- Schließen der Ladeklappe.

Nach Beendigung des Ladevorgangs übermittelt der Laderoboter die Aufforderung an das Fahrzeug, die Ladebuchse zu entriegeln, damit der Ladestecker gezogen werden kann. Nach dem Entriegeln zieht der Roboter den Ladestecker aus der Ladebuchse und bewegt sich in eine sichere Ausgangsposition. Sobald die sichere Ausgangsposition erreicht wird, übergibt der Roboter die Freigabe zurück an das Fahrzeug. Das Fahrzeug schließt daraufhin die Ladeklappe und kann nun ausparken, um die Ladestation für weitere Fahrzeuge verfügbar zu machen. Anstelle eines automatischen Ausparkvorgangs durch das Fahrzeug kann das Fahrzeug natürlich auch durch einen Fahrer ausgeparkt werden. Dadurch, dass die Freigabe des Kraftfahrzeugs durch den Laderoboter erst erfolgt, wenn dieser eine sichere Position eingenommen hat, werden Beschädigungen des Fahrzeugs beim Ausparken verhindert.

Gemäß einem Aspekt der Erfindung werden zum Beenden des Ladevorgangs Informationen über einen Entzug eines Ladewunsches oder eine Änderung des Zustands des Kraftfahrzeugs an den Laderoboter übermittelt. In der Regel wird der Ladevorgang erst dann beendet, wenn ein gewünschter Ladezustand erreicht ist. Allerdings kann es vorkommen, dass der Ladevorgang vorzeitig beendet werden soll, z.B. weil das Fahrzeug bereits früher als ursprünglich geplant benötigt wird. In diesem Fall kann der Ladewunsch entzogen werden, beispielsweise durch eine entsprechende Nutzereingabe. Ebenso kann der Ladevorgang beendet werden, wenn sich der Zustand des Fahrzeugs ändert, beispielsweise wenn die Türen entriegelt werden. Auf diese Weise wird sichergestellt, dass das Fahrzeug jederzeit wieder kurzfristig verfügbar ist.

Besonders vorteilhaft wird ein erfindungsgemäßes Verfahren oder eine erfindungsgemäße Vorrichtung in einem autonomen oder teilautonomen Kraftfahrzeug eingesetzt. Ein solches Kraftfahrzeug ist optimal auf die Verwendung mit einem erfindungsgemäßen Laderoboter abgestimmt.

Gemäß einem weiteren Aspekt der Erfindung umfasst ein Verfahren für einen Laderoboter zum Steuern eines Ladevorgangs für ein Kraftfahrzeug die Schritte:
- Aufbauen einer direkten Kommunikationsverbindung zwischen dem Kraftfahrzeug und dem Laderoboter, sobald das Kraftfahrzeug in die Reichweite des Laderoboters kommt;
- Empfangen eines Rechts zum Blockieren des Kraftfahrzeugs durch den Laderoboter;
- Blockieren des Kraftfahrzeugs;
- Einstecken eines Ladesteckers in eine Ladebuchse des Kraftfahrzeugs; und
- Starten eines Ladevorgangs.

Gemäß einem weiteren Aspekt der Erfindung enthält ein Computerprogramm Instruktionen, die bei Ausführung durch einen Computer den Computer zur Ausführung der folgenden Schritte seitens eines Laderoboters zum Steuern eines Ladevorgangs für ein Kraftfahrzeug veranlassen:
- Aufbauen einer direkten Kommunikationsverbindung zwischen dem Kraftfahrzeug und dem Laderoboter, sobald das Kraftfahrzeug in die Reichweite des Laderoboters kommt;
- Empfangen eines Rechts zum Blockieren des Kraftfahrzeugs durch den Laderoboter;
- Blockieren des Kraftfahrzeugs;
- Einstecken eines Ladesteckers in eine Ladebuchse des Kraftfahrzeugs; und
- Starten eines Ladevorgangs.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine Vorrichtung für einen Laderoboter zum Steuern eines Ladevorgangs für ein Kraftfahrzeug auf:
- ein Kommunikationsmodul, das eingerichtet ist, eine direkte Kommunikationsverbindung zwischen dem Kraftfahrzeug und dem Laderoboter aufzubauen, sobald das Kraftfahrzeug in die Reichweite des Laderoboters kommt;
- ein Kontrollmodul, das eingerichtet ist, ein Recht zum Blockieren des Kraftfahrzeugs zu empfangen und das Kraftfahrzeug zu blockieren, bevor ein Ladestecker in eine Ladebuchse des Kraftfahrzeugs eingesteckt wird; und
- eine Steuereinheit, die eingerichtet ist, das Einstecken des Ladesteckers in die Ladebuchse des Kraftfahrzeugs und das Starten eines Ladevorgangs zu veranlassen.

Erfindungsgemäß ist aus Sicht des Laderoboters vorgesehen, dass eine Kommunikation zwischen dem Kraftfahrzeug und dem Laderoboter stattfindet. Kommt das Fahrzeug in die Reichweite des Roboters, so wird eine Verbindung hergestellt. Das Fahrzeug wird daraufhin vor dem Roboter geparkt oder parkt dort automatisch. Hat das Fahrzeug alle für den Ladevorgang erforderlichen Zustände erfüllt, wird dies an den Laderoboter kommuniziert, die Ladeklappe geöffnet und die Verantwortung für bzw. die Aufsicht über das Fahrzeug auf den Laderoboter übertragen. Der Laderoboter blockiert daraufhin das Fahrzeug. Das Fahrzeug kann nun erst wieder aktiv werden, wenn der Roboter eine Freigabe erteilt. Auf diese Weise wird verhindert, dass das Fahrzeug ausparkt, während sich der Roboter in der Nähe der Ladeklappe befindet. Der Laderoboter steckt im Anschluss den Ladestecker in die Ladebuchse des Kraftfahrzeugs und veranlasst den gewünschten Ladevorgang.

Gemäß einem Aspekt der Erfindung umfasst das Verfahren zusätzlich die Schritte:
- Beenden des Ladevorgangs;
- Übermitteln einer Entriegelungsaufforderung für den Ladestecker an das Kraftfahrzeug;
- Bewegen des Laderoboters in eine Ausgangsposition; und
- Freigeben des Kraftfahrzeugs.

Nach Beendigung des Ladevorgangs übermittelt der Laderoboter die Aufforderung an das Fahrzeug, die Ladebuchse zu entriegeln, damit der Ladestecker gezogen werden kann. Nach dem Entriegeln zieht der Roboter den Ladestecker aus der Ladebuchse und bewegt sich in eine sichere Ausgangsposition. Sobald die sichere Ausgangsposition erreicht wird, übermittelt der Roboter eine Freigabe an das Fahrzeug. Das Fahrzeug kann daraufhin die Ladeklappe schließen und ausparken, z.B. um die Ladestation für weitere Fahrzeuge verfügbar zu machen.

Gemäß einem Aspekt der Erfindung werden vor dem Beenden des Ladevorgangs Informationen über einen Entzug eines Ladewunsches oder eine Änderung des Zustands des Kraftfahrzeugs durch den Laderoboter empfangen oder es wird das Vollenden des Ladevorgangs festgestellt. In der Regel wird der Ladevorgang erst dann beendet, wenn ein gewünschter Ladezustand erreicht ist. Allerdings kann es vorkommen, dass der Ladevorgang vorzeitig beendet werden soll. In diesem Fall kann der Ladewunsch entzogen werden, beispielsweise durch eine entsprechende Nutzereingabe. Ebenso kann der Ladevorgang beendet werden, wenn sich der Zustand des Fahrzeugs ändert, beispielsweise wenn die Türen entriegelt werden.

Besonders vorteilhaft wird ein erfindungsgemäßes Verfahren oder eine erfindungsgemäße Vorrichtung in einem Laderoboter eingesetzt. Ein solcher Laderoboter ist optimal auf die Verwendung mit einem erfindungsgemäßen Kraftfahrzeug abgestimmt.

Weitere Merkmale der vorliegenden Erfindung werden aus der nachfolgenden Beschreibung und den angehängten Ansprüchen in Verbindung mit den Figuren ersichtlich.
- Fig. 1: zeigt schematisch ein Verfahren zum Steuern eines Ladevorgangs für ein Kraftfahrzeug aus Sicht des Kraftfahrzeugs;
- Fig. 2: zeigt eine erste Ausführungsform einer zur Verwendung in einem Kraftfahrzeug geeigneten Vorrichtung zum Steuern eines Ladevorgangs für das Kraftfahrzeug;
- Fig. 3: zeigt eine zweite Ausführungsform einer zur Verwendung in einem Kraftfahrzeug geeigneten Vorrichtung zum Steuern eines Ladevorgangs für das Kraftfahrzeug;
- Fig. 4: stellt schematisch ein Kraftfahrzeug dar, in dem eine erfindungsgemäße Lösung realisiert ist;
- Fig. 5: zeigt schematisch ein Verfahren zum Steuern eines Ladevorgangs für ein Kraftfahrzeug aus Sicht eines Laderoboters;
- Fig. 6: zeigt eine erste Ausführungsform einer zur Verwendung in einem Laderoboter geeigneten Vorrichtung zum Steuern eines Ladevorgangs für ein Kraftfahrzeug;
- Fig. 7: zeigt eine zweite Ausführungsform einer zur Verwendung in einem Laderoboter geeigneten Vorrichtung zum Steuern eines Ladevorgangs für ein Kraftfahrzeug; und
- Fig. 8: zeigt schematisch ein Systemkonzept der erfindungsgemäßen Lösung.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

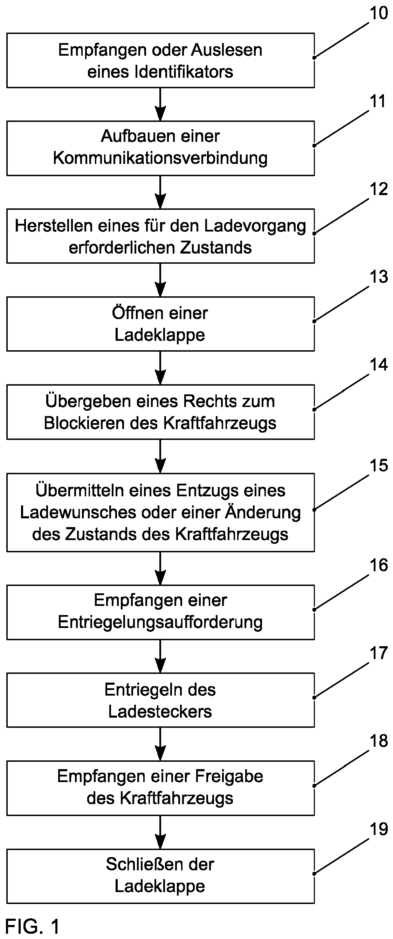

Fig. 1 zeigt schematisch ein Verfahren zum Steuern eines Ladevorgangs für ein Kraftfahrzeug aus Sicht des Kraftfahrzeugs. In einem ersten Schritt 10 wird ein Identifikator eines Laderoboters für die Kommunikation mit dem Laderoboter empfangen oder ausgelesen. Dann wird eine direkte Kommunikationsverbindung zwischen dem Kraftfahrzeug und dem Laderoboter aufgebaut 11, sobald das Kraftfahrzeug in die Reichweite des Laderoboters kommt. Im Anschluss stellt das Kraftfahrzeug einen für den Ladevorgang erforderlichen Zustand her 12 und öffnet 13 eine Ladeklappe, um den Zugang zu einer Ladebuchse zu ermöglichen. Wenn dies erfolgt ist, übergibt 14 das Kraftfahrzeug ein Recht zum Blockieren des Kraftfahrzeugs an den Laderoboter, der daraufhin das Kraftfahrzeug blockiert, einen Ladestecker in eine Ladebuchse des Kraftfahrzeugs einsteckt und den Ladevorgang einleitet. Während des Ladevorgangs kann das Kraftfahrzeug Informationen über einen Entzug eines Ladewunsches oder eine Änderung des Zustands des Kraftfahrzeugs an den Laderoboter übermitteln 15, um den Ladevorgang zu beenden. In Reaktion auf das Beenden des Ladevorgangs empfängt 16 das Kraftfahrzeug eine Entriegelungsaufforderung für den Ladestecker und entriegelt 17 diesen daraufhin. Nach dem Entriegeln 17 zieht der Laderoboter den Ladestecker aus der Ladebuchse und bewegt sich in eine sichere Ausgangsposition. Sobald die sichere Ausgangsposition erreicht wurde, empfängt 18 das Kraftfahrzeug eine Freigabe und schließt 19 die Ladeklappe.

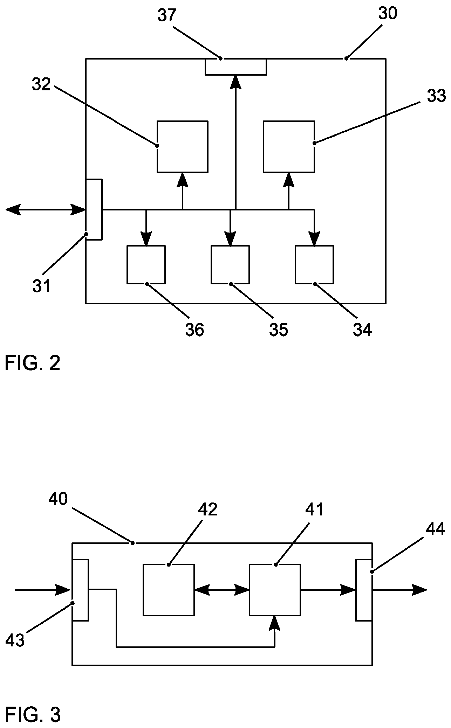

Fig. 2 zeigt eine erste Ausführungsform einer zur Verwendung in einem Kraftfahrzeug geeigneten Vorrichtung 30 zum Steuern eines Ladevorgangs für ein Kraftfahrzeug. Die Vorrichtung 30 hat zumindest eine Schnittstelle 31, über die ein Identifikator eines Laderoboters für die Kommunikation mit dem Laderoboter empfangen oder ausgelesen werden kann. Die Vorrichtung 30 hat zudem ein Kommunikationsmodul 32, das eingerichtet ist, eine direkte Kommunikationsverbindung zwischen dem Kraftfahrzeug und dem Laderoboter aufzubauen, sobald das Kraftfahrzeug in die Reichweite des Laderoboters kommt. Des Weiteren ist zumindest ein Steuergerät 33 vorgesehen, das eingerichtet ist, einen für den Ladevorgang erforderlichen Zustand des Kraftfahrzeugs herzustellen und eine Ladeklappe des Kraftfahrzeugs zu öffnen. Die Vorrichtung 30 weist außerdem ein Kontrollmodul 34 auf, das eingerichtet ist, ein Recht zum Blockieren des Kraftfahrzeugs an den Laderoboter zu übergeben, bevor ein Ladestecker in eine Ladebuchse des Kraftfahrzeugs eingesteckt wird. Während eines Ladevorgangs kann das Kommunikationsmodul 32 über die Schnittstelle 31 Informationen über einen Entzug eines Ladewunsches oder eine Änderung des Zustands des Kraftfahrzeugs an den Laderoboter übermitteln, um so den Ladevorgang zu beenden. In Reaktion auf das Beenden des Ladevorgangs empfängt das Kommunikationsmodul 32 eine Entriegelungsaufforderung für den Ladestecker. Das Kontrollmodul 34 veranlasst daraufhin das Entriegeln des Ladesteckers. Sobald der Laderoboter den Ladestecker aus Ladebuchse gezogen und sich in eine sichere Ausgangsposition bewegt hat, empfängt das Kommunikationsmodul 32 eine Freigabe des Kraftfahrzeugs. Das Kontrollmodul 34 veranlasst in diesem Fall das Schließen der Ladeklappe.

Das Kommunikationsmodul 32, das Steuergerät 33 und das Kontrollmodul 34 können von einer Kontrolleinheit 35 gesteuert werden. Über eine Benutzerschnittstelle 37 können gegebenenfalls Einstellungen des Kommunikationsmoduls 32, des Steuergeräts 33, des Kontrollmoduls 34 oder der Kontrolleinheit 35 geändert werden. Über die Benutzerschnittstelle 37 kann der Nutzer zudem einen Ladewunsch eingeben. Ein solcher kann alternativ oder zusätzlich auch vom Fahrzeug ausgehen oder über den Schnittstelle 31 empfangen werden. Die in der Vorrichtung 30 anfallenden Daten können bei Bedarf in einem Speicher 36 der Vorrichtung 30 abgelegt werden, beispielsweise für eine spätere Auswertung oder für eine Nutzung durch die Komponenten der Vorrichtung 30. Das Kommunikationsmodul 32, das Steuergerät 33, das Kontrollmodul 34 sowie die Kontrolleinheit 35 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 31 kann als bidirektionale Schnittstelle oder getrennt in Eingang und Ausgang implementiert sein.

Fig. 3 zeigt eine vereinfachte schematische Darstellung einer zweiten Ausführungsform einer zur Verwendung in einem Kraftfahrzeug geeigneten Vorrichtung 40 zum Steuern eines Ladevorgangs für das Kraftfahrzeug. Die Vorrichtung 40 weist einen Prozessor 42 und einen Speicher 41 auf. Beispielsweise handelt es sich bei der Vorrichtung 40 um einen Computer oder ein Steuergerät. Im Speicher 41 sind Instruktionen abgelegt, die die Vorrichtung 40 bei Ausführung durch den Prozessor 42 veranlassen, die Schritte gemäß einem der beschriebenen Verfahren auszuführen. Die im Speicher 41 abgelegten Instruktionen verkörpern somit ein durch den Prozessor 42 ausführbares Programm, welches das erfindungsgemäße Verfahren realisiert. Die Vorrichtung 40 hat einen Eingang 43 zum Empfangen von Informationen, insbesondere von Daten, die von einem Laderoboter oder einem Leitsystem bereitgestellt werden. Vom Prozessor 42 generierte Daten werden über einen Ausgang 44 bereitgestellt. Darüber hinaus können sie im Speicher 41 abgelegt werden. Der Eingang 43 und der Ausgang 44 können zu einer bidirektionalen Schnittstelle zusammengefasst sein.

Der Prozessor 42 kann eine oder mehrere Prozessoreinheiten umfassen, beispielsweise Mikroprozessoren, digitale Signalprozessoren oder Kombinationen daraus.

Die Speicher 36, 41 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

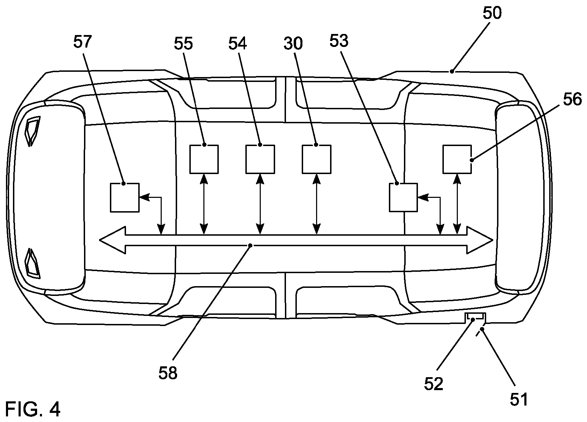

Fig. 4 stellt schematisch ein Kraftfahrzeug 50 dar, in dem eine erfindungsgemäße Lösung realisiert ist. Das Kraftfahrzeug 50 weist eine Ladebuchse 52 auf, die hinter einer Ladeklappe 51 angeordnet ist. Weiterhin weist das Kraftfahrzeug 50 eine Vorrichtung 30 zum Steuern eines

Ladevorgangs für das Kraftfahrzeug 50 auf. Weitere Komponenten des Kraftfahrzeugs 50 sind ein Sensorsystem 53 zur Erfassung der Fahrzeugumgebung, ein Navigationssystem 54, eine Datenübertragungseinheit 55 sowie eine Reihe von Steuerungssystemen 56 für einen autonomen oder teilautonomen Fahrbetrieb, von denen eines exemplarisch dargestellt ist. Mittels der Datenübertragungseinheit 55 kann eine Verbindung zu einem Laderoboter oder einem Leitsystem aufgebaut werden, beispielsweise unter Verwendung einer WLAN- oder Bluetooth-Verbindung. Zur Speicherung von Daten ist ein Speicher 57 vorhanden. Der Datenaustausch zwischen den verschiedenen Komponenten des Kraftfahrzeugs 50 erfolgt über ein Netzwerk 58.

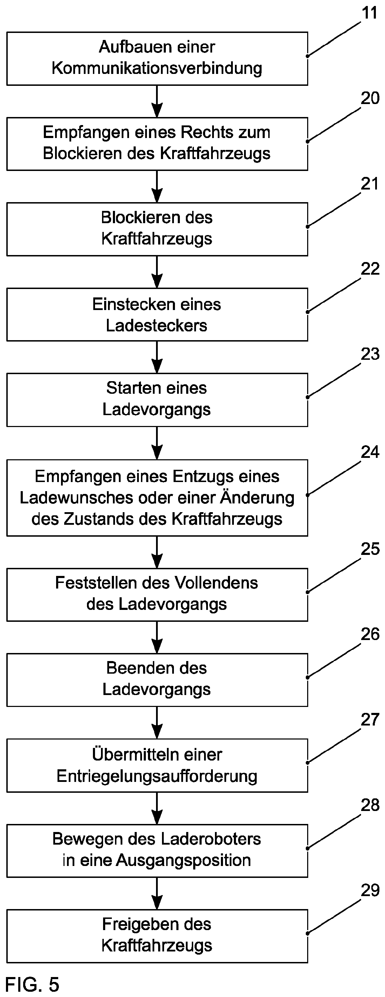

Fig. 5 zeigt schematisch ein Verfahren zum Steuern eines Ladevorgangs für ein Kraftfahrzeug aus Sicht eines Laderoboters. In einem ersten Schritt 11 wird eine direkte Kommunikationsverbindung zwischen dem Kraftfahrzeug und dem Laderoboter aufgebaut 11, sobald das Kraftfahrzeug in die Reichweite des Laderoboters kommt. Nachdem das Kraftfahrzeug anschließend einen für den Ladevorgang erforderlichen Zustand hergestellt und eine Ladeklappe geöffnet hat, empfängt 20 der Laderoboter vom Kraftfahrzeug ein Recht zum Blockieren des Kraftfahrzeugs. Der Laderoboter blockiert 21 daraufhin das Kraftfahrzeug und steckt einen Ladestecker in eine Ladebuchse des Kraftfahrzeugs ein 22. Im Anschluss wird der Ladevorgang gestartet 23. Während des Ladevorgangs kann der Laderoboter vom Kraftfahrzeug Informationen über einen Entzug eines Ladewunsches oder eine Änderung des Zustands des Kraftfahrzeugs empfangen 24. Alternativ kann der Laderoboter feststellen 25, dass der Ladevorgang wie geplant vollendet wurde. In beiden Fällen wird der Ladevorgang beendet 26 und der Laderoboter übermittelt 27 eine Entriegelungsaufforderung für den Ladestecker an das Kraftfahrzeug. Nach dem Entriegeln zieht der Laderoboter den Ladestecker aus der Ladebuchse und bewegt sich 28 in eine sichere Ausgangsposition. Sobald die sichere Ausgangsposition erreicht wurde, gibt der Laderoboter das Kraftfahrzeug wieder frei 29.

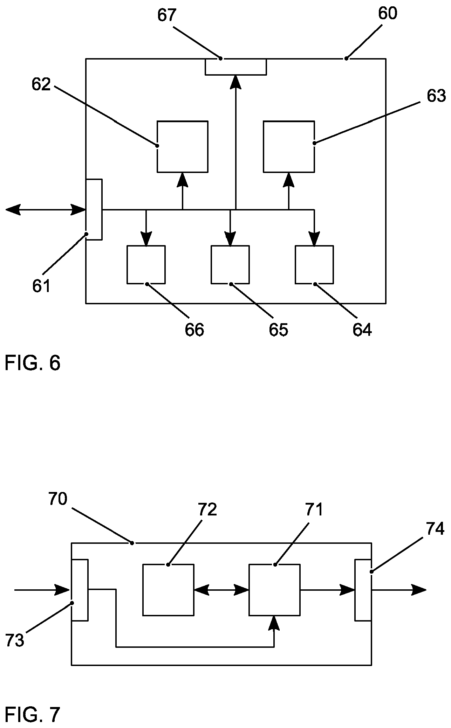

Fig. 6 zeigt eine erste Ausführungsform einer zur Verwendung in einem Laderoboter geeigneten Vorrichtung 60 zum Steuern eines Ladevorgangs für ein Kraftfahrzeug. Die Vorrichtung 60 hat zumindest eine Schnittstelle 61, über die ein Kommunikationsmodul 62 eine direkte Kommunikationsverbindung zwischen dem Kraftfahrzeug und dem Laderoboter aufbauen kann, sobald das Kraftfahrzeug in die Reichweite des Laderoboters kommt. Die Vorrichtung 60 weist außerdem ein Kontrollmodul 63 auf, das eingerichtet ist, ein Recht zum Blockieren des Kraftfahrzeugs vom Kraftfahrzeug zu empfangen und das Kraftfahrzeug zu blockieren, bevor ein Ladestecker in eine Ladebuchse des Kraftfahrzeugs eingesteckt wird. Des Weiteren weist die Vorrichtung 60 eine Steuereinheit 64 auf, die eingerichtet ist, das Einstecken des Ladesteckers in die Ladebuchse des Kraftfahrzeugs und das Starten eines Ladevorgangs zu veranlassen. Während des Ladevorgangs kann das Kommunikationsmodul 62 über die Schnittstelle 61 vom Kraftfahrzeug Informationen über einen Entzug eines Ladewunsches oder eine Änderung des Zustands des Kraftfahrzeugs empfangen. Alternativ kann die Steuereinheit 64 feststellen, dass der Ladevorgang wie geplant vollendet wurde. In beiden Fällen beendet die Steuereinheit 64 den Ladevorgang. Das Kommunikationsmodul 62 übermittelt daraufhin eine Entriegelungsaufforderung für den Ladestecker an das Kraftfahrzeug. Nach dem Entriegeln veranlasst die Steuereinheit 64, dass der Ladestecker aus der Ladebuchse gezogen wird und sich der Laderoboter in eine sichere Ausgangsposition bewegt. Sobald die sichere Ausgangsposition erreicht wurde, übermittelt das Kommunikationsmodul 62 eine Freigabe an das Kraftfahrzeug.

Das Kommunikationsmodul 62, das Kontrollmodul 63 und die Steuereinheit 64 können von einer Kontrolleinheit 65 gesteuert werden. Über eine Benutzerschnittstelle 67 können gegebenenfalls Einstellungen des Kommunikationsmoduls 62, des Kontrollmoduls 63, der Steuereinheit 64 oder der Kontrolleinheit 65 durch einen Betreiber des Laderoboters geändert werden. Die in der Vorrichtung 60 anfallenden Daten können bei Bedarf in einem Speicher 66 der Vorrichtung 60 abgelegt werden, beispielsweise für eine spätere Auswertung oder für eine Nutzung durch die Komponenten der Vorrichtung 60. Das Kommunikationsmodul 62, das Kontrollmodul 63, die Steuereinheit 64 sowie die Kontrolleinheit 65 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Die Schnittstelle 61 kann als bidirektionale Schnittstelle oder getrennt in Eingang und Ausgang implementiert sein.

Fig. 7 zeigt eine zweite Ausführungsform einer zur Verwendung in einem Laderoboter geeigneten Vorrichtung 70 zum Steuern eines Ladevorgangs für ein Kraftfahrzeug. Die Vorrichtung 70 weist einen Prozessor 72 und einen Speicher 71 auf. Beispielsweise handelt es sich bei der Vorrichtung 70 um einen Computer oder ein Steuergerät. Im Speicher 71 sind Instruktionen abgelegt, die die Vorrichtung 70 bei Ausführung durch den Prozessor 72 veranlassen, die Schritte gemäß einem der beschriebenen Verfahren auszuführen. Die im Speicher 71 abgelegten Instruktionen verkörpern somit ein durch den Prozessor 72 ausführbares Programm, welches das erfindungsgemäße Verfahren realisiert. Die Vorrichtung 70 hat einen Eingang 73 zum Empfangen von Informationen, insbesondere von Daten, die von einem Kraftfahrzeug oder einem Leitsystem bereitgestellt werden. Vom Prozessor 72 generierte Daten werden über einen Ausgang 74 bereitgestellt. Darüber hinaus können sie im Speicher 71 abgelegt werden. Der Eingang 73 und der Ausgang 74 können zu einer bidirektionalen Schnittstelle zusammengefasst sein.

Der Prozessor 72 kann eine oder mehrere Prozessoreinheiten umfassen, beispielsweise Mikroprozessoren, digitale Signalprozessoren oder Kombinationen daraus.

Die Speicher 66, 71 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

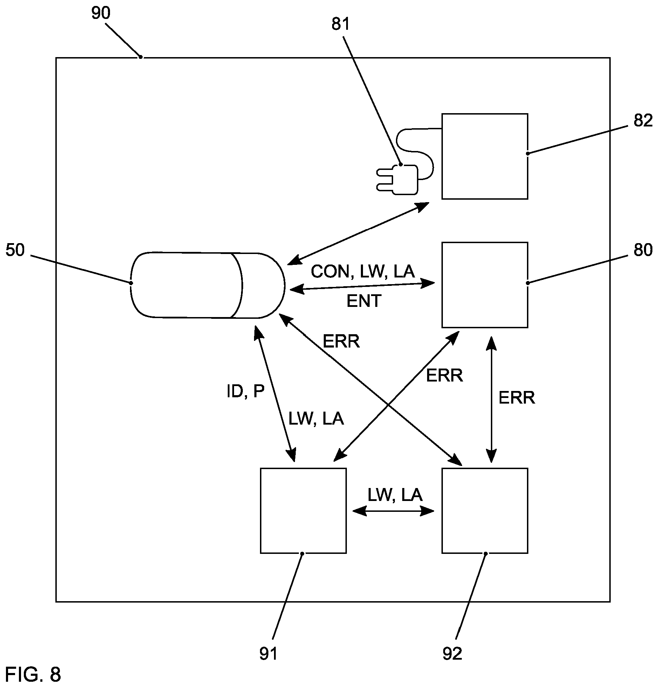

Nachfolgend soll eine bevorzugte Ausführungsform der Erfindung anhand von Fig. 8 beschrieben werden.

Fig. 8 zeigt schematisch ein Systemkonzept der erfindungsgemäßen Lösung. In diesem Beispiel ist der Laderoboter 80 Bestandteil der Infrastruktur eines bewirtschafteten Parkraumes 90, z.B. eines Parkhauses, der für eine Nutzung durch autonome oder teilautonome Kraftfahrzeuge 50 vorgesehen ist. Zusätzlich zum Laderoboter 80 umfasst das System eine Ladesäule 82 mit einem Ladestecker 81 sowie ein Leitsystem 91. Im Beispiel sind der Laderoboter 80 und die Ladesäule 82 getrennte Systeme. Natürlich können der Laderoboter 80 und die Ladesäule 82 auch als kombiniertes System realisiert werden. Ein in den Parkraum 90 einfahrendes Kraftfahrzeug 50 setzt sich mit dem Leitsystem 91 in Verbindung, z.B. über eine WiFi-Verbindung. Nach Herstellung der Verbindung übermittelt das Kraftfahrzeug 50 einen Ladewunsch LW an das Leitsystem 91, z.B. einen bestimmten Ladezustand der Batterie in Prozent. Der Ladewunsch LW kann alternativ auch von einem Nutzer des Kraftfahrzeugs 50 an das Leitsystem 91 übermittelt werden, z.B. unter Verwendung eines Bedienterminals oder eines Mobilgeräts 92 des Nutzers, z.B. einem Smartphone oder einem Tablet. Die Verbindung mit dem Leitsystem 91 kann dabei beispielsweise mittels Mobilfunk oder einer WiFi-Verbindung erfolgen. Der konkrete Ladewunsch LW kann zudem auch zu einem späteren Zeitpunkt vom Kraftfahrzeug 50 direkt an den Laderoboter 80 übermittelt werden.

Nach Erhalt des Ladewunsches LW übermittelt das Leitsystem 91 einen Identifikator ID des zugewiesenen Laderoboters 80 sowie Informationen P zum zugehörigen Parkplatz an das Kraftfahrzeug 50. Beispielsweise kann das Kraftfahrzeug 50 eine eindeutige Bluetooth ID oder eine WLAN-MAC-Adresse des Laderoboters erhalten. Die Informationen P zum Parkplatz können z.B. in Form einer zu fahrenden Trajektorie oder als Kartendaten bereitgestellt werden. Das Kraftfahrzeug 50 fährt daraufhin autonom zum angegebenen Laderoboter 80 und setzt sich mit diesem in Verbindung. Alternativ kann das Kraftfahrzeug 50 auch durch das Leitsystem 91 oder einen Fahrer zum zugewiesenen Laderoboter 80 gesteuert werden. Nachdem die Kommunikationsverbindung zwischen dem Kraftfahrzeug 50 und dem Laderoboter 80 aufgebaut wurde, stellt das Kraftfahrzeug 50 einen für den Ladevorgang erforderlichen Zustand her und öffnet die Ladeklappe. Im Anschluss übergibt es die weitere Verantwortung bzw. die Aufsicht über das Fahrzeug an den Laderoboter 80. Dazu erhält der Laderoboter 80 die Berechtigung CON, das Kraftfahrzeug 50 zu blockieren.

Nachdem der Laderoboter 80 das Kraftfahrzeug 50 blockiert hat, steckt er den Ladestecker 81 der Ladesäule 82 in die Ladebuchse des Kraftfahrzeugs 50 ein und startet den Ladevorgang. Eine gegebenenfalls erforderliche Kommunikation zwischen dem Kraftfahrzeug 50 und der Ladesäule 82 kann dabei leitungsgebunden mit Hilfe von Powerline Communications erfolgen. Der Ladevorgang wird beendet, wenn das Kraftfahrzeug 50 wunschgemäß geladen ist, ein Entzug LA des Ladewunschs erfolgt oder sich der Zustand des Kraftfahrzeugs ändert, z.B. weil die Türen entriegelt werden. Nach Beendigung des Ladevorgangs übermittelt der Laderoboter 80 die Aufforderung ENT an das Kraftfahrzeug 50, die Ladedose zu entriegeln, sodass der Ladestecker 81 gezogen werden kann. Nach dem Entriegeln zieht der Laderoboter 80 den Ladestecker 81 aus der Ladedose und bewegt sich in eine sichere Ausgangsposition. Sobald die Ausgangsposition erreicht wurde, übergibt der Laderoboter die 80 die Verantwortung wieder an das Kraftfahrzeug, d.h. er übermittelt eine Freigabe CON an das Kraftfahrzeug 50. Das Kraftfahrzeug 50 schließt daraufhin die Ladeklappe und kann ausparken. Das Ausparken kann dabei autonom, durch das Leitsystem gesteuert oder durch einen Fahrer erfolgen. Der ursprünglich übermittelte Identifikator des zugewiesenen Laderoboters 80 kann je nach Bedarf vom Kraftfahrzeug 50 wieder gelöscht werden.

Wird die Verbindung zwischen dem Laderoboter 80 und dem Kraftfahrzeug 50 während des Steckvorgangs, des Ladevorgangs oder des Freigabevorgangs unterbrochen, wird ein Fehler ERR an das Leitsystem 91 und gegebenenfalls an das Mobilgerät 92 des Nutzers gemeldet. Wenn der Fehler behoben werden kann, wird der unterbrochene Vorgang fortgesetzt. Bei einer Unterbrechung des Freigabevorgangs kann die Freigabe alternativ auch durch einen Fahrer des Kraftfahrzeugs 50 oder durch Personal erfolgen, indem z.B. per Fahrzeugschlüssel die Ladedose entriegelt und der Ladestecker 81 mit oder ohne den Laderoboter 80 aus der Ladedose bewegt wird.

### Bezugszeichenliste

- 10: Empfangen oder Auslesen eines Identifikators
- 11: Aufbauen einer Kommunikationsverbindung
- 12: Herstellen eines für den Ladevorgang erforderlichen Zustands
- 13: Öffnen einer Ladeklappe
- 14: Übergeben eines Rechts zum Blockieren des Kraftfahrzeugs
- 15: Übermitteln eines Entzugs eines Ladewunsches oder einer Änderung des Zustands des Kraftfahrzeugs
- 16: Empfangen einer Entriegelungsaufforderung
- 17: Entriegeln des Ladesteckers
- 18: Empfangen einer Freigabe des Kraftfahrzeugs
- 19: Schließen der Ladeklappe
- 20: Empfangen eines Rechts zum Blockieren des Kraftfahrzeugs
- 21: Blockieren des Kraftfahrzeugs
- 22: Einstecken eines Ladesteckers
- 23: Starten eines Ladevorgangs
- 24: Empfangen eines Entzugs eines Ladewunsches oder einer Änderung des Zustands des Kraftfahrzeugs
- 25: Feststellen des Vollendens des Ladevorgangs
- 26: Beenden des Ladevorgangs
- 27: Übermitteln einer Entriegelungsaufforderung
- 28: Bewegen des Laderoboters in eine Ausgangsposition
- 29: Freigeben des Kraftfahrzeugs
- 30: Vorrichtung
- 31: Schnittstelle
- 32: Kommunikationsmodul
- 33: Steuergerät
- 34: Kontrollmodul
- 35: Kontrolleinheit
- 36: Speicher
- 37: Benutzerschnittstelle
- 40: Vorrichtung
- 41: Speicher
- 42: Prozessor
- 43: Eingang
- 44: Ausgang
- 50: Kraftfahrzeug
- 51: Ladeklappe
- 52: Ladebuchse
- 53: Sensorsystem
- 54: Navigationssystem
- 55: Datenübertragungseinheit
- 56: Steuerungssystem
- 57: Speicher
- 58: Netzwerk
- 60: Vorrichtung
- 61: Schnittstelle
- 62: Kommunikationsmodul
- 63: Kontrollmodul
- 64: Steuereinheit
- 65: Kontrolleinheit
- 66: Speicher
- 67: Benutzerschnittstelle
- 70: Vorrichtung
- 71: Speicher
- 72: Prozessor
- 73: Eingang
- 74: Ausgang
- 80: Laderoboter
- 81: Ladestecker
- 82: Ladesäule
- 90: Parkraum
- 91: Leitsystem
- 92: Mobilgerät
- CON: Fahrzeugverantwortung
- ENT: Entriegelungsaufforderung
- ERR: Fehlerstatus
- ID: Identifikator
- LA: Ladeabbruch
- LW: Ladewunsch
- P: Parkplatzinformation

## Patentansprüche

1. Verfahren für ein Kraftfahrzeug (50) zum Steuern eines Ladevorgangs für das Kraftfahrzeug (50), mit den Schritten:
- Aufbauen (11) einer direkten Kommunikationsverbindung zwischen dem Kraftfahrzeug (50) und einem Laderoboter (80), sobald das Kraftfahrzeug (50) in die Reichweite des Laderoboters (80) kommt;
- Herstellen (12) eines für den Ladevorgang erforderlichen Zustands des Kraftfahrzeugs (50) vor dem Öffnen (13) einer Ladeklappe (51) des Kraftfahrzeugs (50), wobei der erforderliche Zustand zumindest einen der folgenden Zustände umfasst: die Parkbremse ist angezogen, der Gangwahlhebel befindet sich in der Stellung "P", das Kraftfahrzeug (50) ist verriegelt, es besteht ein Ladewunsch, die Verbindung zum Laderoboter (80) besteht;
- Öffnen (13) der Ladeklappe (51) des Kraftfahrzeugs (50); und
- Übergeben (14) eines Rechts (CON) zum Blockieren des Kraftfahrzeugs (50) an den Laderoboter (80);
- Blockieren des Kraftfahrzeugs (50) durch den Laderoboter (80) nach dem Übergeben des Rechts und bevor durch den Laderoboter (80) ein Ladestecker (81) in eine Ladebuchse des Kraftfahrzeugs (50) eingesteckt wird.

2. Verfahren gemäß Anspruch 1, wobei das Kraftfahrzeug (50) vor dem Aufbauen (11) der Kommunikationsverbindung einen Identifikator (ID) des Laderoboters (80) für die Kommunikation mit dem Laderoboter (80) empfängt oder aus einem Speicher (53) des Kraftfahrzeugs (50) ausliest (10).

3. Verfahren gemäß Anspruch 1 oder 2, mit den Schritten:
- in Reaktion auf das Beenden (24) eines Ladevorgangs, Empfangen (16) einer Entriegelungsaufforderung (ENT) für den Ladestecker (81);
- Entriegeln (17) des Ladesteckers (81);
- Empfangen (18) einer Freigabe (CON) des Kraftfahrzeugs (50) vom Laderoboter (80); und
- Schließen (19) der Ladeklappe (51).

4. Verfahren gemäß Anspruch 3, wobei zum Beenden (24) des Ladevorgangs Informationen über einen Entzug (LA) eines Ladewunsches oder eine Änderung des Zustands des Kraftfahrzeugs (50) an den Laderoboter (80) übermittelt werden (15).

5. Verfahren für einen Laderoboter (80) zum Steuern eines Ladevorgangs für ein Kraftfahrzeug (50), mit den Schritten:
- Aufbauen (11) einer direkten Kommunikationsverbindung zwischen dem Kraftfahrzeug (50) und dem Laderoboter (80), sobald das Kraftfahrzeug (50) in die Reichweite des Laderoboters (80) kommt;
- Empfangen (20) eines Rechts (CON) zum Blockieren des Kraftfahrzeugs (50) durch den Laderoboter (80);
- Blockieren (21) des Kraftfahrzeugs (50);
- Einstecken (22) eines Ladesteckers (81) in eine Ladebuchse (52) des Kraftfahrzeugs (50); und
- Starten (23) eines Ladevorgangs.

6. Verfahren gemäß Anspruch 5, mit den Schritten:
- Beenden (26) des Ladevorgangs;
- Übermitteln (27) einer Entriegelungsaufforderung (ENT) für den Ladestecker (81) an das Kraftfahrzeug (50);
- Bewegen (28) des Laderoboters (80) in eine Ausgangsposition; und
- Freigeben (29) des Kraftfahrzeugs (50).

7. Verfahren gemäß Anspruch 6, wobei vor dem Beenden (25) des Ladevorgangs Informationen über einen Entzug (LA) eines Ladewunsches oder eine Änderung des Zustands des Kraftfahrzeugs (50) durch den Laderoboter (80) empfangen werden (24) oder das Vollenden des Ladevorgangs festgestellt wird (25).

8. Computerprogramm mit Instruktionen, die bei Ausführung durch einen Computer den Computer zur Ausführung der Schritte des Verfahrens gemäß einem der Ansprüche 1 bis 7 zum Steuern eines Ladevorgangs für ein Kraftfahrzeug (50) veranlassen.

9. Vorrichtung (30) für ein Kraftfahrzeug (50) zum Steuern eines Ladevorgangs für das Kraftfahrzeug (50), mit:
- einem Kommunikationsmodul (32), das eingerichtet ist, eine direkte Kommunikationsverbindung zwischen dem Kraftfahrzeug (50) und einem Laderoboter (80) aufzubauen (11), sobald das Kraftfahrzeug (50) in die Reichweite des Laderoboters (80) kommt;
- zumindest einem Steuergerät (33), das eingerichtet ist, vor dem Öffnen (13) einer Ladeklappe (51) des Kraftfahrzeugs (50) einen für den Ladevorgang erforderlichen Zustand des Kraftfahrzeugs (50) herzustellen (12) und anschließend die Ladeklappe (51) des Kraftfahrzeugs (50) zu öffnen (13), wobei der erforderliche Zustand zumindest einen der folgenden Zustände umfasst: die Parkbremse ist angezogen, der Gangwahlhebel befindet sich in der Stellung "P", das Kraftfahrzeug (50) ist verriegelt, es besteht ein Ladewunsch, die Verbindung zum Laderoboter (80) besteht; und
- einem Kontrollmodul (34), das eingerichtet ist, ein Recht (CON) zum Blockieren des Kraftfahrzeugs (50) an den Laderoboter (80) zu übergeben (14), wobei das Kraftfahrzeug (50) nach dem Übergeben (14) des Rechts (CON) und vor dem Einstecken (22) eines Ladesteckers (81) durch den Laderoboter (80) in eine Ladebuchse (52) des Kraftfahrzeugs (50) durch den Laderoboter (80) blockiert wird.

10. Vorrichtung (60) für einen Laderoboter (80) zum Steuern eines Ladevorgangs für ein Kraftfahrzeug (50), mit:
- einem Kommunikationsmodul (62), das eingerichtet ist, eine direkte Kommunikationsverbindung zwischen dem Kraftfahrzeug (50) und dem Laderoboter (80) aufzubauen (11), sobald das Kraftfahrzeug (50) in die Reichweite des Laderoboters (80) kommt;
- einem Kontrollmodul (63), das eingerichtet ist, ein Recht (CON) zum Blockieren des Kraftfahrzeugs (50) zu empfangen (20) und das Kraftfahrzeug (50) zu blockieren (21), bevor ein Ladestecker (81) in eine Ladebuchse (52) des Kraftfahrzeugs (50) eingesteckt wird; und
- einer Steuereinheit (64), die eingerichtet ist, das Einstecken (22) des Ladesteckers (81) in die Ladebuchse (52) des Kraftfahrzeugs (50) und das Starten (23) eines Ladevorgangs zu veranlassen.

11. Kraftfahrzeug (50), **dadurch gekennzeichnet, dass** das Kraftfahrzeug (50) eine Vorrichtung (30) gemäß Anspruch 9 aufweist oder eingerichtet ist, ein Verfahren gemäß einem der Ansprüche 1 bis 4 zum Steuern eines Ladevorgangs für das Kraftfahrzeug (50) auszuführen.

12. Laderoboter (80) für ein Kraftfahrzeug (50), **dadurch gekennzeichnet, dass** der Laderoboter (80) eine Vorrichtung (60) gemäß Anspruch 10 aufweist oder eingerichtet ist, ein Verfahren gemäß einem der Ansprüche 5 bis 7 zum Steuern eines Ladevorgangs für das Kraftfahrzeug (50) auszuführen.

## Claims

1. Method for a motor vehicle (50) for controlling a charging process for the motor vehicle (50), comprising the steps of:
- establishing (11) a direct communication link between the motor vehicle (50) and a charging robot (80) as soon as the motor vehicle (50) comes within range of the charging robot (80);
- producing (12) a state of the motor vehicle (50) required for the charging process prior to opening (13) a charging flap (51) of the motor vehicle (50), wherein the required state comprises at least one of the following states: the parking brake is engaged, the gear selector is in position "P," the motor vehicle (50) is locked, there is a charging request, the link to the charging robot (80) is established;
- opening (13) the charging flap (51) of the motor vehicle (50); and
- transferring (14) a right (CON) to block the motor vehicle (50) to the charging robot (80);
- blocking the motor vehicle (50) by means of the charging robot (80) after transferring the right and before the charging robot (80) inserts a charging plug (81) into a charging socket of the motor vehicle (50).

2. Method according to claim 1, wherein prior to establishing (11) the communication link, the motor vehicle (50) receives an identifier (ID) of the charging robot (80) for communication with the charging robot (80) or reads (10) the identifier from a memory (53) of the motor vehicle (50).

3. Method according to claim 1 or 2, comprising the steps of:
- receiving (16) an unlock request (ENT) for the charging plug (81) in response to the end (24) of a charging process;
- unlocking (17) the charging plug (81);
- receiving (18) a release (CON) of the motor vehicle (50) from the charging robot (80); and
- closing (19) the charging flap (51).

4. Method according to claim 3, wherein in order to end (24) the charging process, information regarding a withdrawal (LA) of a charging request or a change in the state of the motor vehicle (50) is transmitted (15) to the charging robot (80).

5. Method for a charging robot (80) for controlling a charging process for a motor vehicle (50), comprising the steps of:
- establishing (11) a direct communication link between the motor vehicle (50) and the charging robot (80) as soon as the motor vehicle (50) comes within range of the charging robot (80);
- receiving (20) a right (CON) to block the motor vehicle (50) by means of the charging robot (80);
- blocking (21) the motor vehicle (50);
- inserting (22) a charging plug (81) into a charging socket (52) of the motor vehicle (50); and
- starting (23) a charging process.

6. Method according to claim 5, comprising the steps of:
- ending (26) the charging process;
- transmitting (27) an unlock request (ENT) for the charging plug (81) to the motor vehicle (50);
- moving (28) the charging robot (80) into a starting position; and
- releasing (29) the motor vehicle (50).

7. Method according to claim 6, wherein prior to ending (25) the charging process, information regarding a withdrawal (LA) of a charging request or a change in the state of the motor vehicle (50) is received (24) by the charging robot (80) or the completion of the charging process is detected (25).

8. Computer program comprising instructions that, when executed by a computer, cause the computer to execute the steps of the method according to any of claims 1 to 7 for controlling a charging process for a motor vehicle (50).

9. Device (30) for a motor vehicle (50) for controlling a charging process for the motor vehicle (50), comprising:
- a communication module (32) which is designed to establish (11) a direct communication link between the motor vehicle (50) and a charging robot (80) as soon as the motor vehicle (50) comes within range of the charging robot (80);
- at least one control unit (33) which is designed to produce (12) a state of the motor vehicle (50) required for the charging process prior to opening (13) a charging flap (51) of the motor vehicle (50) and subsequently to open (13) the charging flap (51) of the motor vehicle (50), wherein the required state comprises at least one of the following states: the parking brake is engaged, the gear selector is in position "P," the motor vehicle (50) is locked, there is a charging request, the link to the charging robot (80) is established; and
- a control module (34) which is designed to transfer (14) a right (CON) to block the motor vehicle (50) to the charging robot (80), wherein the motor vehicle (50) is blocked by the charging robot (80) after transferring (14) the right (CON) and prior to the charging robot (80) inserting (22) a charging plug (81) into a charging socket (52) of the motor vehicle (50).

10. Device (60) for a charging robot (80) for controlling a charging process for a motor vehicle (50), comprising:
- a communication module (62) which is designed to establish (11) a direct communication link between the motor vehicle (50) and the charging robot (80) as soon as the motor vehicle (50) comes within range of the charging robot (80);
- a control module (63) which is designed to receive (20) a right (CON) to block the motor vehicle (50) and to block (21) the motor vehicle (50) before a charging plug (81) is inserted into a charging socket (52) of the motor vehicle (50); and
- a control unit (64) which is designed to initiate the insertion (22) of the charging plug (81) into the charging socket (52) of the motor vehicle (50) and the start (23) of a charging process.

11. Motor vehicle (50), **characterized in that** the motor vehicle (50) has a device (30) according to claim 9 or is designed to execute a method according to any of claims 1 to 4 for controlling a charging process for the motor vehicle (50).

12. Charging robot (80) for a motor vehicle (50), **characterized in that** the charging robot (80) has a device (60) according to claim 10 or is designed to execute a method according to any of claims 5 to 7 for controlling a charging process for the motor vehicle (50).

## Revendications

1. Procédé destiné à un véhicule automobile (50) pour la commande d'un processus de recharge pour le véhicule automobile (50), comportant les étapes de :
- établissement (11) d'une liaison de communication directe entre le véhicule automobile (50) et un robot de recharge (80) dès que le véhicule automobile (50) entre dans le rayon d'action du robot de recharge (80) ;
- mise en place (12) d'un état du véhicule automobile (50) nécessaire au processus de recharge avant l'ouverture (13) d'un volet de recharge (51) du véhicule automobile (50), dans lequel l'état nécessaire comprend au moins l'un des états suivants : le frein de stationnement est serré, le levier de sélection de vitesse se trouve en position « P », le véhicule automobile (50) est verrouillé, il existe un souhait de recharge, la liaison avec le robot de recharge (80) est constituée ;
- ouverture (13) du volet de recharge (51) du véhicule automobile (50) ; et
- transfert (14) au robot de recharge (80) d'un droit (CON) permettant de bloquer le véhicule automobile (50) ;
- blocage du véhicule automobile (50) par le robot de recharge (80) après le transfert du droit et avant que le robot de recharge (80) n'insère une fiche de recharge (81) dans une prise de recharge du véhicule automobile (50).

2. Procédé selon la revendication 1, dans lequel le véhicule automobile (50), avant l'établissement (11) de la liaison de communication, reçoit un identifiant (ID) du robot de recharge (80) pour la communication avec le robot de recharge (80), ou le lit (10) à partir d'une mémoire (53) du véhicule automobile (50).

3. Procédé selon la revendication 1 ou 2, comportant les étapes de :
- en réponse à la fin (24) d'un processus de recharge, réception (16) d'une demande de déverrouillage (ENT) pour la fiche de recharge (81) ;
- déverrouillage (17) de la fiche de recharge (81) ;
- réception (18) d'une libération (CON) du véhicule automobile (50) en provenance du robot de recharge (80) ; et
- fermeture (19) du volet de recharge (51).

4. Procédé selon la revendication 3, dans lequel, pour mettre fin (24) au processus de recharge, des informations concernant un retrait (LA) d'un souhait de recharge ou un changement de l'état du véhicule automobile (50) sont transmises (15) au robot de recharge (80).

5. Procédé destiné à un robot de recharge (80) pour la commande d'un processus de recharge pour un véhicule automobile (50), comportant les étapes de :
- établissement (11) d'une liaison de communication directe entre le véhicule automobile (50) et le robot de recharge (80) dès que le véhicule automobile (50) entre dans le rayon d'action du robot de recharge (80) ;
- réception (20) par le robot de recharge (80) d'un droit (CON) permettant de bloquer le véhicule automobile (50) ;
- blocage (21) du véhicule automobile (50) ;
- insertion (22) d'une fiche de recharge (81) dans une prise de recharge (52) du véhicule automobile (50) ; et
- démarrage (23) d'un processus de recharge.

6. Procédé selon la revendication 5, comportant les étapes de :
- fin (26) du processus de recharge ;
- transmission (27) d'une demande de déverrouillage (ENT) de la fiche de recharge (81) au véhicule automobile (50) ;
- déplacement (28) du robot de recharge (80) vers une position initiale ; et
- libération (29) du véhicule automobile (50).

7. Procédé selon la revendication 6, dans lequel, avant la fin (25) du processus de recharge, des informations concernant un retrait (LA) d'un souhait de recharge ou un changement de l'état du véhicule automobile (50) sont reçues (24) par le robot de recharge (80) ou l'achèvement du processus de recharge est constaté (25).

8. Programme informatique comportant des instructions qui, lors de leur exécution par un ordinateur, amènent l'ordinateur à exécuter les étapes du procédé selon l'une des revendications 1 à 7 pour la commande d'un processus de recharge pour un véhicule automobile (50).

9. Dispositif (30) destiné à un véhicule automobile (50) pour la commande d'un processus de recharge pour le véhicule automobile (50), comportant :
- un module de communication (32) qui est conçu pour établir (11) une liaison de communication directe entre le véhicule automobile (50) et un robot de recharge (80) dès que le véhicule automobile (50) entre dans le champ d'action du robot de recharge (80) ;
- au moins un appareil de commande (33) qui est conçu pour mettre en place, avant l'ouverture (13) d'un volet de recharge (51) du véhicule automobile (50), un état du véhicule automobile (50) nécessaire au processus de recharge (12), puis ouvrir (13) le volet de recharge (51) du véhicule automobile (50), dans lequel l'état nécessaire comprend au moins l'un des états suivants : le frein de stationnement est serré, le levier de sélection de vitesse se trouve en position « P », le véhicule automobile (50) est verrouillé, il existe un souhait de recharge, la liaison avec le robot de recharge (80) est constituée ; et
- un module de contrôle (34) qui est conçu pour transférer (14) au robot de recharge (80) un droit (CON) permettant de bloquer le véhicule automobile (50), dans lequel le véhicule automobile (50), après le transfert (14) du droit (CON) et avant l'insertion (22) d'une fiche de recharge (81) par le robot de recharge (80) dans une prise de recharge (52) du véhicule automobile (50), est bloqué par le robot de recharge (80).

10. Dispositif (60) destiné à un robot de recharge (80) pour la commande d'un processus de recharge d'un véhicule automobile (50), comportant :
- un module de communication (62) qui est conçu pour établir (11) une liaison de communication directe entre le véhicule automobile (50) et le robot de recharge (80) dès que le véhicule automobile (50) entre dans le champ d'action du robot de recharge (80) ;
- un module de contrôle (63) qui est conçu pour recevoir (20) un droit (CON) permettant de bloquer le véhicule automobile (50) et pour bloquer (21) le véhicule automobile (50), avant qu'une fiche de recharge (81) ne soit insérée dans une prise de recharge (52) du véhicule automobile (50) ; et
- une unité de commande (64) qui est conçue pour provoquer l'insertion (22) de la fiche de recharge (81) dans la prise de recharge (52) du véhicule automobile (50) et le démarrage (23) d'un processus de recharge.

11. Véhicule automobile (50), **caractérisé en ce que** le véhicule automobile (50) présente un dispositif (30) selon la revendication 9 ou est conçu pour exécuter un procédé selon l'une des revendications 1 à 4 pour la commande d'un processus de recharge pour le véhicule automobile (50).

12. Robot de recharge (80) pour un véhicule automobile (50), **caractérisé en ce que** le robot de recharge (80) présente un dispositif (60) selon la revendication 10 ou est conçu pour exécuter un procédé selon l'une des revendications 5 à 7 pour la commande d'un processus de recharge pour le véhicule automobile (50).
